# EUROPEAN PATENT APPLICATION

(11) **EP 4 270 718 A1**
(43) Date of publication of application: **01.11.2023**
(21) Application number: 21908634.5
(22) Date of filing: 19.08.2021
(51) Int. Cl.: H02J 7/00, B60L 58/18, B60L 58/20

(54) **BATTERY PACK MASTER-SLAVE DYNAMIC PARALLEL OPERATION METHOD, POWERED DEVICE, AND STORAGE MEDIUM**

(30) Priority: 24.12.2020 CN 202011553338
(71) Applicant: DONGGUAN POWERAMP TECHNOLOGY LIMITED, Dongguan, Guangdong 523000 (CN)
(72) Inventor: HU, Liang, Dongguan, Guangdong 523000 (CN)
(74) Representative: Icosa
(86) International application number: PCT/CN2021/113397
(87) International publication number: WO 2022/134629

(57) **Abstract**

This application provides a master-slave dynamic paralleling method for battery packs. The method includes: during discharging, discharging a battery pack with the highest power, and when a voltage difference between battery packs reaches a preset threshold range and no fault protection state is triggered, parallel-connecting a battery pack to the lowest power for discharging, and performing paralleling mode switching; and during charging, charging a battery pack with the lowest voltage, and when voltages of all battery packs are consistent and no fault protection state is triggered, parallel-connecting another battery pack for charging, and performing paralleling mode switching. The application further provides an electric device and a storage medium. This application can meet the requirements of high power output and capacity expansion of loads.

## Description

### TECHNICAL FIELD

This application relates to the field of battery technologies, and in particular, to a master-slave dynamic paralleling method for battery packs, an electric device, and a storage medium.

### BACKGROUND

Currently, electric vehicles are designed with multiple battery compartments, so as to expand capacity and increase mileage by adding parallel-connected battery packs. Normally, the battery packs of an electric vehicle operate in two states during driving: only one battery pack in operation or multiple battery packs in operation. After charge and discharge cycles over a long period, battery packs with the same initial state will gradually have inconsistent power, making it difficult to support simultaneous charge and discharge of multiple battery packs. In addition, when multiple battery packs have inconsistent power and the charge switch circuit and discharge switch circuit of the master battery pack are on, the battery packs are at risk of loop charging (that is, the battery pack with higher power discharges while the battery pack with lower power is charged). The loop charging can lead to irreversible damage to the battery cells of the battery packs in the case of high temperature, low temperature, or high power.

### SUMMARY

In view of this, it is necessary to provide a master-slave dynamic paralleling method for battery packs, an electric device, and a storage medium, so as to meet the needs of high power output and capacity expansion of loads.

An embodiment of this application provides a master-slave dynamic paralleling method for battery packs, applied to a battery paralleling system, where the paralleling system includes N battery packs, N is greater than or equal to 2, and the method includes: when M battery packs in the battery paralleling system are in discharging state, and N-M battery packs in the N battery packs are in idle state, collecting first operating parameters of each battery pack in the battery paralleling system, where the first operating parameters include voltage and fault protection state of each battery pack, and M is greater than or equal to 1 and less than or equal to N; based on respective first operating parameters of the N-M battery packs and voltages of the M battery packs, controlling the battery packs in idle state to be parallel-connected to the M battery packs.

According to some embodiments of this application, the controlling the battery packs in idle state to be parallel-connected to the M battery packs includes: under the condition that a voltage difference between a battery pack with the highest power in the M battery packs and any one of the N-M battery packs reaches a preset threshold range and no fault protection state is triggered, controlling the any one battery pack to be parallel-connected to the battery pack with the highest power and stay in discharging state together with the battery pack with the highest power.

According to some embodiments of this application, the controlling the battery packs in idle state to be parallel-connected to the M battery packs further includes: under the condition that a voltage difference between a battery pack with the highest power in the M battery packs and any one of the N-M battery packs that is not parallel-connected to the battery pack with the highest power reaches a preset threshold range, controlling the any one battery pack to be parallel-connected to the battery pack with the highest power and then discharge.

According to some embodiments of this application, the N battery packs include a master battery pack and at least one slave battery pack, and the method further includes: performing paralleling mode switching based on the first operating parameters, where paralleling modes include a first mode, a second mode, a third mode, and a fourth mode, where in the first mode, charge switches and discharge switches of the master battery pack and the multiple slave battery packs are in open state; in the second mode, a pre-discharge switch, a charge switch, and a discharge switch of the master battery pack are all in closed state, and pre-discharge switches, charge switches, and discharge switches of the multiple slave battery packs are all in open state; in the third mode, the pre-discharge switches, charge switches, and discharge switches of the multiple slave battery packs are all in closed state, and the pre-discharge switch, charge switch, and discharge switch of the master battery pack are all in open state; and in the fourth mode, the pre-discharge switches, charge switches, and discharge switches of the master battery pack and the multiple slave battery packs are all in closed state.

According to some embodiments of this application, the first operating parameters further include a first current, a cell temperature, and a sleep instruction, and the performing paralleling mode switching based on the first operating parameters includes: under the condition that the master battery pack and the multiple slave battery packs all meet a current testing condition, and none of the master battery pack and the multiple slave battery packs trigger the fault protection state, controlling the battery paralleling system to switch from the first mode to a mode selection state, where the current testing condition includes: when the master battery pack and the multiple slave battery packs discharge a preset amount of electricity within a preset time interval, the first currents of the master battery pack and the multiple slave battery packs are all less than a first preset current; under the condition that the master battery pack and the multiple slave battery packs all meet the current testing condition, or the master battery pack does not trigger the fault protection state and the multiple slave battery packs triggers the fault protection state, controlling the battery paralleling system to switch from the second mode to the mode selection state; under the condition that the master battery pack and the multiple slave battery packs all meet the current testing condition, or the master battery pack triggers the fault protection state and none of the multiple slave battery packs triggers the fault protection state, or the master battery pack and the multiple slave battery packs all receive the sleep instruction, controlling the battery paralleling system to switch from the third mode to the mode selection state; and under the condition that the master battery pack and the multiple slave battery packs all receive the sleep instruction, controlling the battery paralleling system to switch from the fourth mode to the mode selection state.

According to some embodiments of this application, the mode selection state includes: the discharge switch of the master battery pack is in closed state or the charge switch of the master battery pack is in open state, and the discharge switches of the multiple slave battery packs are in closed state or the charge switch of the master battery pack is in open state.

According to some embodiments of this application, the performing paralleling mode switching based on the first operating parameters further includes: under the condition that the master battery pack and the multiple slave battery packs all trigger the fault protection state, controlling the battery paralleling system to enter the first mode from the mode selection state; based on the first current and the voltage difference, or under the condition that the master battery pack does not trigger the fault protection state and the multiple slave battery packs all trigger the fault protection state, or under the condition that the master battery pack and the multiple slave battery packs all receive a sleep instruction, controlling the battery paralleling system to enter the second mode from the mode selection state; based on the first current and the voltage difference, or under the condition that the master battery pack triggers the fault protection state and none of the multiple slave battery packs trigger the fault protection state, controlling the battery paralleling system to enter the third mode from the mode selection state; based on the first current and the voltage difference, or under the condition that none of the master battery pack and the multiple slave battery packs triggers the fault protection state, or under the condition that cell temperatures of the master battery pack and the multiple slave battery packs meet a preset temperature range, controlling the battery paralleling system to enter the fourth mode from the mode selection state.

An embodiment of this application provides a master-slave dynamic paralleling method for battery packs, applied to a battery paralleling system, where the paralleling system includes J battery packs, J is greater than or equal to 2, and the method includes: when K battery packs in the battery paralleling system are in charging state, and J-K battery packs in the J battery packs are in idle state, collecting second operating parameters of each battery pack in the battery paralleling system, where the second operating parameters include voltage and fault protection state of each battery pack, and K is greater than or equal to 1 and less than or equal to J; and based on respective second operating parameters of the J-K battery packs and voltages of the K battery packs, controlling the battery packs in idle state to be parallel-connected to the K battery packs.

According to some embodiments of this application, the controlling the battery packs in idle state to be parallel-connected to the K battery packs includes: under the condition that an absolute value of a voltage difference between a battery pack with the lowest voltage in the J battery packs and any one of the J-K battery packs is less than or equal to a first preset voltage value, and no fault protection state is triggered, controlling the any one battery pack to be parallel-connected to the battery pack with the lowest voltage and stay in charging state together with the battery pack with the lowest voltage.

According to some embodiments of this application, the controlling the battery packs in idle state to be parallel-connected to the K battery packs further includes: under the condition that an absolute value of a voltage difference between a battery pack with the lowest voltage in the J battery packs and any one of the J-K battery packs that is not parallel-connected to the battery pack with the lowest voltage is less than or equal to a first preset voltage value, controlling the any one battery pack to be parallel-connected to the battery pack with the lowest voltage and then get charged.

According to some embodiments of this application, the J battery packs include a master battery pack and at least one slave battery pack, and the method further includes: where paralleling modes include a first mode, a second mode, a third mode, and a fourth mode, where in the first mode, charge switches and discharge switches of the master battery pack and the multiple slave battery packs are in open state; in the second mode, a pre-discharge switch, a charge switch, and a discharge switch of the master battery pack are all in closed state, and pre-discharge switches, charge switches, and discharge switches of the multiple slave battery packs are all in open state; in the third mode, the pre-discharge switches, charge switches, and discharge switches of the multiple slave battery packs are all in closed state, and the pre-discharge switch, charge switch, and discharge switch of the master battery pack are all in open state; and in the fourth mode, the pre-discharge switches, charge switches, and discharge switches of the master battery pack and the multiple slave battery packs are all in closed state.

According to some embodiments of this application, the second operating parameters further include a second current, a cell temperature, and a sleep instruction, and the performing paralleling mode switching based on the second operating parameters includes: after any one of the J-K battery packs is parallel-connected to the K battery packs, under the condition that the master battery pack meets a first voltage testing condition and the multiple slave battery packs meet a second voltage testing condition, and none of the master battery pack and the multiple slave battery packs trigger the fault protection state, controlling the battery paralleling system to switch from the first mode to a mode selection state, where the first voltage testing condition includes: an absolute value of a voltage difference between the master battery pack and the slave battery pack is greater than a second preset voltage value, and a voltage of the slave battery pack is less than a voltage of the master battery pack, or the absolute value of the voltage difference between the master battery pack and the slave battery pack is less than the second preset voltage value, and the second current is less than a second preset current; and the second voltage testing condition includes: the absolute value of the voltage difference between the master battery pack and the slave battery pack is greater than the second preset voltage value, and the voltage of the master battery pack is less than the voltage of the slave battery pack, or the absolute value of the voltage difference between the master battery pack and the slave battery pack is less than the second preset voltage value, and the second current is less than the second preset current; under the condition that the master battery pack meets the first voltage testing condition, or the master battery pack does not trigger the fault protection state and the multiple slave battery packs trigger the fault protection state, controlling the battery paralleling system to switch from the second mode to the mode selection state; under the condition that the multiple slave battery packs meet the second voltage testing condition, or the master battery pack triggers the fault protection state and none of the multiple slave battery packs triggers the fault protection state, or the master battery pack and the multiple slave battery packs all receive the sleep instruction, controlling the battery paralleling system to switch from the third mode to the mode selection state; and under the condition that the master battery pack and the multiple slave battery packs all receive the sleep instruction, controlling the battery paralleling system to switch from the fourth mode to the mode selection state.

According to some embodiments of this application, the second current is less than the second preset current, the second current is less than the second preset current, the mode selection state includes: the discharge switch of the master battery pack is in closed state or the charge switch of the master battery pack is in open state, and the discharge switches of the multiple slave battery packs are in closed state or the charge switch of the master battery pack is in open state.

According to some embodiments of this application, the performing paralleling mode switching based on the second operating parameters further includes: under the condition that the master battery pack and the multiple slave battery packs all trigger the fault protection state, or the master battery pack and the multiple slave battery packs all receive the sleep instruction, controlling the battery paralleling system to enter the first mode from the mode selection state; based on the voltages of the master battery pack and the multiple slave battery packs and the voltage difference, or under the condition that the master battery pack does not trigger the fault protection state and the multiple slave battery packs all trigger the fault protection state, or under the condition that the master battery pack and the multiple slave battery packs all receive the sleep instruction, controlling the battery paralleling system to enter the second mode from the mode selection state; based on the voltages of the master battery pack and the multiple slave battery packs and the voltage difference, or under the condition that the master battery pack triggers the fault protection state and none of the multiple slave battery packs trigger the fault protection state, controlling the battery paralleling system to enter the third mode from the mode selection state; based on the second current and the voltage difference, and under the condition that none of the master battery pack and the multiple slave battery packs do not trigger the fault protection state, and under the condition that cell temperatures of the master battery pack and the multiple slave battery packs meet a preset temperature range, controlling the battery paralleling system to enter the fourth mode from the mode selection state.

An embodiment of this application provides an electric device. The electric device includes: a battery paralleling system and a load, where the battery paralleling system is used to supply power to the load; and the battery paralleling system includes multiple battery packs, and the battery pack includes a battery management system, the battery management system is used to load and execute the foregoing master-slave dynamic paralleling method for battery packs.

According to some embodiments of this application, the electric device includes an electric vehicle, or an electric bicycle, or an electric motorcycle.

An embodiment of this application provides a storage medium, storing at least one computer instruction, where the at least one computer instruction is loaded by a processor to execute the foregoing master-slave dynamic paralleling method for battery packs.

According to some embodiments of this application, during discharging, a battery pack with the highest power is discharged first, and when a voltage difference between battery packs reaches a preset threshold range and no fault protection state is triggered, a battery pack with the lowest power is parallel-connected for discharging, and paralleling mode switching is performed; and during charging, a battery pack with the lowest voltage is charged first, and when voltages of all battery packs are consistent and no fault protection state is triggered, another battery pack is parallel-connected for charging, and paralleling mode switching is performed. This allows the master battery pack and the slave battery pack to be automatically connected to the battery paralleling system. This method has widespread application and can greatly meet the high power output and capacity expansion requirements of loads of the electric device.

### BRIEF DESCRIPTION OF DRAWINGS

FIG. 1 is a schematic structural diagram of an electric device according to an embodiment of this application.
FIG. 2 is a flowchart of a master-slave dynamic paralleling method for battery packs in a discharging process according to an embodiment of this application.
FIG. 3 is a schematic diagram of paralleling mode switching in a discharging process according to an embodiment of this application.
FIG. 4 is a flowchart of a master-slave dynamic paralleling method for battery packs in a charging process according to an embodiment of this application.
FIG. 5 is a schematic diagram of paralleling mode switching in a charging process according to an embodiment of this application.
FIG. 6 shows function modules of a master-slave dynamic paralleling system for battery packs according to an embodiment of this application.

**Reference signs of main components:**

| | |
|---|---|
| electric device | 1 |
| battery paralleling system | 10 |
| load | 11 |
| battery pack | 12 |
| collection module | 101 |
| control module | 102 |

This application will be further described in detail with reference to the accompanying drawings in the following specific embodiments.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application.

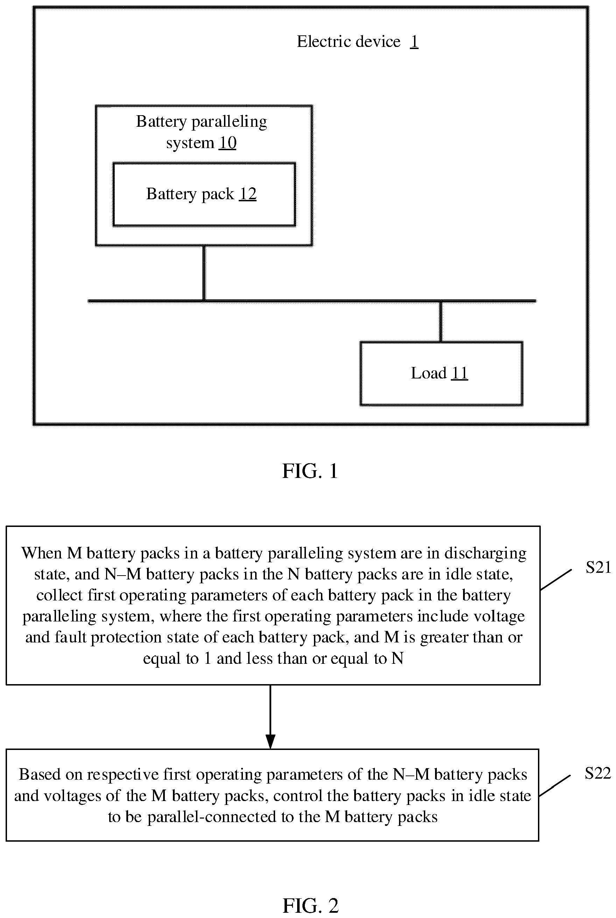

Referring to FIG. 1, FIG. 1 is a schematic diagram of an electric device according to an embodiment of this application. Referring to FIG. 1, a master-slave dynamic paralleling system 10 for battery packs (for convenience of description, hereinafter referred to as "battery paralleling system") runs in an electric device 1. The electric device 1 includes but is not limited to a battery paralleling system 10 and a load 11. The battery paralleling system 10 and the load 11 may be connected via a bus or connected directly.

In an embodiment, the battery paralleling system 10 may include N battery packs 12, N is greater than or equal to 2, and the N battery packs 12 include a master battery pack and at least one slave battery pack. In another embodiment, the battery paralleling system 10 may include J battery packs 12, J is greater than or equal to 2, and the J battery packs 12 also include a master battery pack and at least one slave battery pack. The battery pack 12 may include multiple batteries (not shown in the figure), and the battery include a cell.

The battery in some embodiments of this application is used to store electricity, and both the positive electrodes and negative electrodes of the battery can release and receive charged particles. In terms of application scenarios of battery, the battery in the embodiments of this application may include a power battery and an energy storage battery. The power battery can be, for example, used in electric vehicles, electric bicycles, and other electric tool fields. The energy storage battery can be, for example, used in fields such as energy storage stations, renewable energy grid connection, and micro grids. Taking the power battery as an example, in terms of battery type, the battery may be but is not limited to a lithium iron phosphate system battery or a silicon-added system battery. The lithium iron phosphate system battery is a lithium-ion battery with a positive electrode active material containing lithium iron phosphate, and the silicon-added system battery is a lithium-ion battery with a negative electrode active material containing silicon.

In this embodiment, a battery management system (Battery Management System, BMS) may be provided for the battery pack 12, where the battery cell management of each battery pack 12 is managed by a corresponding battery management system.

It should be noted that FIG. 1 is only an example for description of the electric device 1. In other embodiments, the electric device 1 may alternatively include more or fewer components, or have different component configurations. The electric device 1 may be an energy storage device, an electric motorcycle, an electric bicycle, an electric vehicle, a drone, an electric tool, or any other appropriate rechargeable devices.

Although not shown, the electric device 1 may further include a wireless fidelity (Wireless Fidelity, Wi-Fi) unit, a Bluetooth unit, a loudspeaker, and other components. Details are not described herein.

In this embodiment, the master-slave dynamic paralleling method for battery packs includes four stages: the first stage is a master-slave determination stage, the second stage is a master-slave configuration stage, the third stage is a paralleling stage, and the fourth stage is a sleep stage.

In the master-slave determination stage, a battery pack in the battery paralleling system receives a wake-up signal, and if the wake-up signal received by the battery pack is any one of a battery insertion success signal or a power connection success signal or a charging success signal, the battery pack is determined to be a master battery pack; or if the wake-up signal received by the battery pack is a battery insertion failure signal, the battery pack is determined to be a slave battery pack.

The master-slave configuration stage includes a master configuration procedure and a slave configuration procedure. Specifically, the master configuration procedure includes: sending a wake-up packet to the slave battery pack by the master battery pack, and waiting for the slave battery pack to respond; if the master battery pack receives a response message from the slave battery pack, or the master battery pack meets a sleep condition, ending the procedure; and if the master battery pack receives no response message from the slave battery pack, continuing to send a wake-up packet to the slave battery pack.

The slave configuration procedure includes: waiting to receive a wake-up request from the master battery pack by the slave battery pack, and if the wake-up request from the master battery pack is received, expressing the wake-up request through a wake-up packet, and ending the procedure; or if no request is received from the master battery pack, continuing to wait for the request from the master battery pack.

Referring to FIG. 2, FIG. 2 is a flowchart of a master-slave dynamic paralleling method for battery packs in a discharging process according to an embodiment of this application. During the discharging process of the paralleling stage, the paralleling system includes N battery packs, and the master-slave dynamic paralleling method for battery packs may include the following steps:

Step S21: When M battery packs in the battery paralleling system are in discharging state, and N-M battery packs in the N battery packs are in idle state, collect first operating parameters of each battery pack in the battery paralleling system, where the first operating parameters include voltage and fault protection state of each battery pack, and M is greater than or equal to 1 and less than or equal to N.

In this embodiment, when the electric device includes N battery packs, where M of the battery packs are in discharging state and N-M of the battery packs are in idle state, a battery pack with the highest power discharges first, and the first operating parameters of each battery pack in the battery paralleling system are collected, and how paralleling and discharging are performed is determined based on the first operating parameters.

Step S22: Based on respective first operating parameters of the N-M battery packs and voltages of the M battery packs, control the battery packs in idle state to be parallel-connected to the M battery packs.

In this embodiment, after the battery pack with the highest power in the M battery packs starts to discharge, it is necessary to monitor a voltage difference between the battery pack with the highest power and the N-M battery packs, and determine, based on the voltage difference, whether the N-M battery packs are sequentially parallel-connected to the M battery packs one by one, so as to control the parallel connection of the battery packs in idle state to the M battery packs. The battery management system in the battery pack can collect the voltage of the corresponding battery pack, and can also receive the voltage of another battery pack.

In this embodiment, based on the voltages of the M battery packs, the N-M battery packs in the battery paralleling system are controlled to be parallel-connected to the battery pack with the highest power and then discharge. Specifically, a voltage difference between the battery pack with the highest power and the N-M battery packs in the battery paralleling system is calculated; if a voltage difference between the battery pack with the highest power and any one of the N-M battery packs reaches a preset threshold range, and no fault protection state is triggered, the any one battery pack is parallel-connected to the battery pack with the highest power and then discharge. If there are still battery packs not parallel-connected to the battery pack with the highest power in the N-M battery packs, the voltage of each battery pack in the battery paralleling system is collected; a voltage difference between the battery pack with the highest power and any one of the N-M battery packs that is not parallel-connected to the battery pack with the highest power is calculated; and if the voltage difference between the battery pack with the highest power and any one of the N-M battery packs that is not parallel-connected to the battery pack with the highest power reaches a preset threshold range, and no fault protection state is triggered, the any one battery pack is controlled to be parallel-connected to the battery pack with the highest power. The process repeats until all battery packs in the battery paralleling system are parallel-connected to the battery pack with the highest power.

For example, it is assumed that the battery paralleling system includes a first battery pack, a second battery pack, and a third battery pack. During the discharging process, the first battery pack with the highest power is controlled to discharge; a first voltage difference between the first battery pack and the second battery pack and a second voltage difference between the first battery pack and the third battery pack are calculated; if the first voltage difference reaches a preset threshold range and no fault protection state is triggered, the second battery pack is controlled to be parallel-connected to the first battery pack and then discharge; and if the second voltage difference reaches the preset threshold range and no fault protection state is triggered, the third battery pack is controlled to be parallel-connected to the first battery pack and then discharge.

In this embodiment, the master-slave dynamic paralleling method for battery packs further includes: performing paralleling mode switching based on the first operating parameters, where the first operating parameter further includes a first current, a cell temperature, and a sleep instruction.

In this embodiment, after any one of the N-M battery packs is parallel-connected to the M battery packs, the battery pack paralleling mode can be switched. The first current, cell temperature, fault protection instruction, and sleep instruction of each battery pack in the battery paralleling system during the discharging process are collected, so as to perform the paralleling mode switching.

In this embodiment, paralleling modes include a first mode, a second mode, a third mode, and a fourth mode. In the first mode, charge switches and discharge switches of the master battery pack and the multiple slave battery packs are in open state; in the second mode, a pre-discharge switch, a charge switch, and a discharge switch of the master battery pack are all in closed state, pre-discharge switches, charge switches, and discharge switches of the multiple slave battery packs are all in open state; in the third mode, the pre-discharge switches, charge switches, and discharge switches of the multiple slave battery packs are all in closed state, and the pre-discharge switch, charge switch, and discharge switch of the master battery pack are all in open state; and in the fourth mode, the pre-discharge switches, charge switches, and discharge switch of the master battery pack and the multiple slave battery packs are all in closed state.

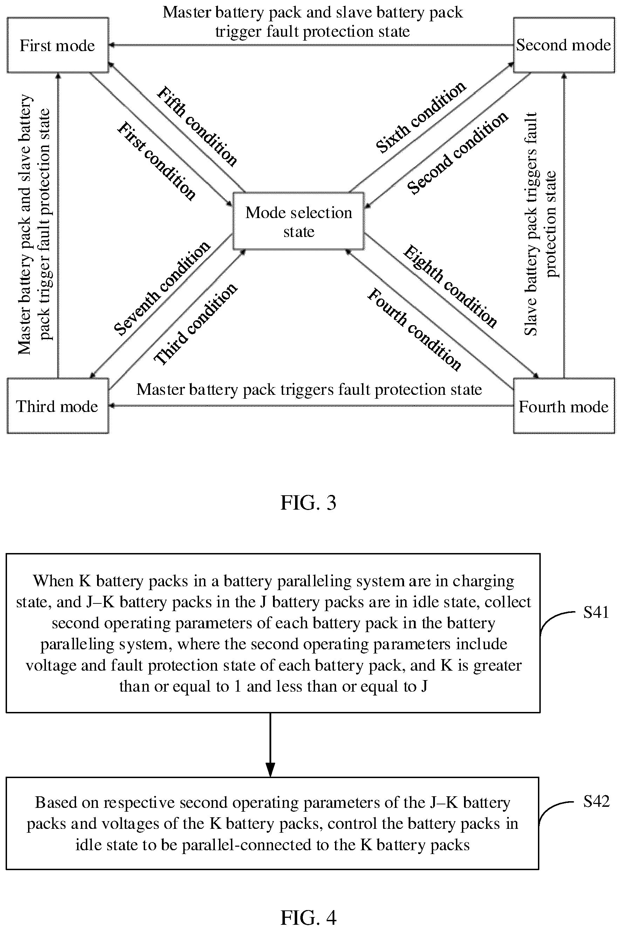

As shown in FIG. 3, in this embodiment, the performing paralleling mode switching during the discharging process includes: under the condition that the master battery pack and the multiple slave battery packs meet a first condition, controlling the battery paralleling system to switch from the first mode to a mode selection state, where the first condition includes a current testing condition, and none of the master battery pack and the multiple slave battery packs trigger the fault protection state; under the condition that the master battery pack and the multiple slave battery packs meet a second condition, controlling the battery paralleling system to switch from the second mode to the mode selection state, where the second condition includes: a current testing condition, or the master battery pack does not trigger the fault protection state and the multiple slave battery packs trigger the fault protection state; under the condition that the master battery pack and the multiple slave battery packs meet a third condition, controlling the battery paralleling system to switch from the third mode to the mode selection state, where the third condition includes: a current testing condition, or the master battery pack triggers the fault protection state and none of the multiple slave battery packs trigger the fault protection state, or the master battery pack and the multiple slave battery packs all receive the sleep instruction; and under the condition that the master battery pack and the multiple slave battery packs meet a fourth condition, controlling the battery paralleling system to switch from the fourth mode to the mode selection state, where the fourth condition includes: the master battery pack and the multiple slave battery packs all receive the sleep instruction.

In this embodiment, the current testing condition includes: when the master battery pack and the multiple slave battery packs discharge a preset amount of electricity within a preset time interval, the first currents of the master battery pack and the multiple slave battery packs are all less than a preset current.

In this embodiment, the mode selection state includes: the discharge switch of the master battery pack is in closed state or the charge switch of the master battery pack is in open state, and the discharge switches of the multiple slave battery packs are in closed state or the charge switch of the master battery pack is in open state.

In this embodiment, the performing paralleling mode switching during the discharging process further includes: under the condition that the master battery pack and the multiple slave battery packs meet a fifth condition, controlling the battery paralleling system to enter the first mode from the mode selection state, where the fifth condition includes: the master battery pack and the multiple slave battery packs all trigger the fault protection state; under the condition that the master battery pack and the multiple slave battery packs meet a sixth condition, controlling the battery paralleling system to enter the second mode from the mode selection state, where the sixth condition includes: the first current and the voltage difference, or if the master battery pack does not trigger the fault protection state and the multiple slave battery packs all trigger the fault protection state, or if the master battery pack and the multiple slave battery packs all receive the sleep instruction; under the condition that the master battery pack and the multiple slave battery packs meet a seventh condition, controlling the battery paralleling system to enter the third mode from the mode selection state, where the seventh condition includes: the first current and the voltage difference, or if the master battery pack triggers the fault protection state and none of the multiple slave battery packs trigger the fault protection state; and under the condition that the master battery pack and the multiple slave battery packs meet an eighth condition, controlling the battery paralleling system to enter the fourth mode from the mode selection state, where the eighth condition includes the first current and the voltage difference, or under the condition that none of the master battery pack and the multiple slave battery packs trigger the fault protection state, or under the condition that cell temperatures of the master battery pack and the multiple slave battery packs meet a preset temperature range. For example, under the condition that the master battery pack and the multiple slave battery packs all trigger the fault protection state, the battery paralleling system is controlled to enter the first mode from the mode selection state.

If the first current of the master battery pack is greater than the first current of the slave battery pack and the first current of the master battery pack is greater than or equal to a first preset current and less than a second preset current, the first current of the slave battery pack is also less than the second preset current, and a difference obtained by subtracting the voltage of the slave battery pack from the voltage of the master battery pack is greater than a preset voltage, the battery paralleling system is controlled to enter the second mode from the mode selection state.

If the first current of the slave battery pack is greater than the first current of the master battery pack, the first current of the slave battery pack is greater than or equal to the first preset current, the first current of the master battery pack is less than the second preset current, the first current of the slave battery pack is also less than the second preset current, and a difference obtained by subtracting the voltage of the master battery pack from the voltage of the slave battery pack is greater than the preset voltage, the battery paralleling system is controlled to enter the third mode from the mode selection state.

If the first current of the slave battery pack is greater than the first current of the master battery pack, the first current of the slave battery pack is greater than or equal to the first preset current, the first current of the master battery pack is less than the second preset current, the first current of the slave battery pack is also less than the second preset current, an absolute value of a voltage difference between the slave battery pack and the master battery pack is less than or equal to the preset voltage, the cell temperatures of the master battery pack and the slave battery pack is greater than a preset temperature range, and the master battery pack and the multiple slave battery packs all trigger the fault protection state, the battery paralleling system is controlled to enter the fourth mode from the mode selection state.

It can be understood that under the condition that the master battery pack triggers the fault protection state, the battery paralleling system is controlled to switch from the fourth mode to the third mode; under the condition that the slave battery pack triggers the fault protection state, the battery paralleling system is controlled to switch from the fourth mode to the second mode; under the condition that the master battery pack and slave battery pack trigger the fault protection state, the battery paralleling system is controlled to switch from the third mode to the first mode; under the condition that none of the master battery pack and the slave battery pack trigger the fault protection state, the battery paralleling system is controlled to switch from the second mode to the first mode.

Referring to FIG. 4, FIG. 4 is a flowchart of a master-slave dynamic paralleling method for battery packs in a charging process according to an embodiment of this application. In the charging process of the paralleling stage, the paralleling system includes J battery packs, J is greater than or equal to 2, and the master-slave dynamic paralleling method for battery packs may include the following steps.

Step S41: When K battery packs in the battery paralleling system are in charging state, and J-K battery packs in the J battery packs are in idle state, collect second operating parameters of each battery pack in the battery paralleling system, where the second operating parameters include voltage and fault protection state of each battery pack, and K is greater than or equal to 1 and less than or equal to J.

In this embodiment, during the charging process of the electric device 1, a battery pack with the lowest voltage is charged first, and then whether to perform simultaneous charging is determined based on the voltages of the battery packs in the battery paralleling system. After the battery pack with the lowest voltage in the K battery pack starts to be charged, the second operating parameters of each battery pack in the battery paralleling system is collected, a voltage difference between the battery pack with the lowest voltage and the J-K battery packs is monitored, and how paralleling is performed is determined based on the voltage difference. The battery management system in the battery pack can collect the voltage of the corresponding battery pack, and can also receive the voltage of another battery pack.

Step S42: Based on respective second operating parameters of the J-K battery packs and voltages of the K battery packs, control the battery packs in idle state to be parallel-connected to the K battery packs.

In this embodiment, it is determined whether the voltages of the J battery packs are consistent by determining whether an absolute value of a voltage difference between the voltages of the J battery packs is less than or equal to a first preset voltage value. If the absolute value of the voltage difference between the voltages of the J battery packs is less than or equal to the first preset voltage value, it is determined that the voltages of the J battery packs are consistent, and based on the voltages of the K battery packs, the J-K battery packs in the battery paralleling system is controlled to be parallel-connected to the battery pack with the lowest voltage and then get charged; if the absolute value of the voltage difference between the voltages of the J battery packs is greater than the first preset voltage value, it is determined that the voltages of the J battery packs are inconsistent, and no paralleling operation is performed.

Specifically, the based on the voltages of the K battery packs, the J-K battery packs in the battery paralleling system to be parallel-connected to the battery pack with the lowest voltage and then get charged includes: calculating a voltage difference between the battery pack with the lowest voltage and the J-K battery packs in the battery paralleling system; under the condition that an absolute value of a voltage difference between the battery pack with the lowest voltage and any one of the J-K battery packs reaches a preset voltage, and no fault protection state is triggered, controlling the any one battery pack to be parallel-connected to the battery pack with the lowest voltage and stay in charging state together with the battery pack with the lowest voltage; if there are still battery packs not parallel-connected to the battery pack with the lowest voltage in the J-K battery packs, the voltage of each battery pack in the battery paralleling system is collected; a voltage difference between the battery pack with the lowest voltage and any one of the J-K battery packs that is not parallel-connected to the battery pack with the lowest voltage is calculated; and if an absolute value of the voltage difference between the battery pack with the lowest voltage and any one of other battery packs that is not parallel-connected to the battery pack with the lowest voltage is less than or equal to the first preset voltage value, and no fault protection state is triggered, controlling the any one battery pack to be parallel-connected to the battery pack with the lowest voltage; and repeating such process until all battery packs in the battery paralleling system are parallel-connected to the battery pack with the lowest voltage.

For example, it is assumed that the battery paralleling system includes a first battery pack, a second battery pack, and a third battery pack. During the charging process, the first battery pack with the lowest voltage is controlled to charge; a first voltage difference between the first battery pack and the second battery pack and a second voltage difference between the first battery pack and the third battery pack are calculated; if an absolute value of the first voltage difference is less than or equal to the first preset voltage value and no fault protection state is triggered, the second battery pack is controlled to be parallel-connected to the first battery pack and then get charged; and if an absolute value of the second voltage difference is less than or equal to the first preset voltage value and no fault protection state is triggered, the third battery pack is controlled to be parallel-connected to the first battery pack and then get charged.

In this embodiment, the master-slave dynamic paralleling method for battery packs further includes: performing paralleling mode switching based on the second operating parameters, where the second operating parameter further includes a second current, a cell temperature, and a sleep instruction.

In this embodiment, after any one of the J-K battery packs is parallel-connected to the K battery packs, the battery pack paralleling mode can be switched. The second current, cell temperature, fault protection instruction, and sleep instruction of each battery pack in the battery paralleling system during the charging process are collected, so as to perform the paralleling mode switching.

In this embodiment, the paralleling modes are the same as those in the discharging process, and will not be repeated herein.

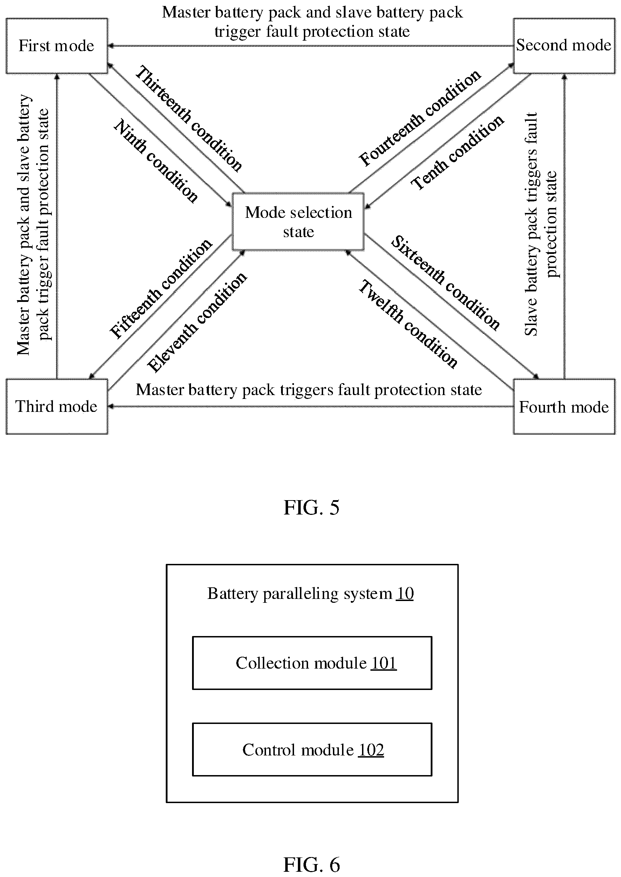

In this embodiment, as shown in FIG. 5, the performing paralleling mode switching based on the second operating parameters includes: under the condition that the master battery pack and the multiple slave battery packs meet a ninth condition, controlling the battery paralleling system to switch from the first mode to the mode selection state, where the ninth condition includes: the master battery pack meets a first voltage testing condition, the multiple slave battery pack meet a second voltage testing condition, and none of the master battery pack and the multiple slave battery packs trigger the fault protection state; under the condition that the master battery pack and the multiple slave battery packs meet a tenth condition, controlling the battery paralleling system to switch from the second mode to the mode selection state, where the tenth condition includes: the master battery pack meets the first voltage testing condition, or the master battery pack does not trigger the fault protection state and the multiple slave battery packs trigger the fault protection state; under the condition that the master battery pack and the multiple slave battery packs meet an eleventh condition, controlling the battery paralleling system to switch from the third mode to the mode selection state, where the eleventh condition includes: the multiple slave battery packs meet the second voltage testing condition, or the master battery pack triggers the fault protection state and none of the multiple slave battery packs trigger the fault protection state, or the master battery pack and the multiple slave battery packs all receive the sleep instruction; and under the condition that the master battery pack and the multiple slave battery packs meet a twelfth condition, controlling the battery paralleling system to switch from the fourth mode to the mode selection state, where the twelfth condition is the same as the fourth condition, and the twelfth condition includes: the master battery pack and the multiple slave battery packs all receive the sleep instruction.

In this embodiment, the first voltage testing condition includes: an absolute value of a voltage difference between the master battery pack and the slave battery pack is greater than a second preset voltage value, and a voltage of the slave battery pack is less than a voltage of the master battery pack, or the absolute value of the voltage difference between the master battery pack and the slave battery pack is less than the second preset voltage value, and the second current is less than a preset current; and the second voltage testing condition includes: the absolute value of the voltage difference between the master battery pack and the slave battery pack is greater than the second preset voltage value, and the voltage of the master battery pack is less than the voltage of the slave battery pack, or the absolute value of the voltage difference between the master battery pack and the slave battery pack is less than the second preset voltage value, and the second current is less than the preset current.

The mode selection state includes: the discharge switch of the master battery pack is in closed state or the charge switch of the master battery pack is in open state, and the discharge switches of the multiple slave battery packs are in closed state or the charge switch of the master battery pack is in open state.

In this embodiment, the performing paralleling mode switching based on the second operating parameters further includes: under the condition that the master battery pack and the multiple slave battery packs meet a thirteenth condition, controlling the battery paralleling system to enter the first mode from the mode selection state, where the thirteenth condition includes: if the master battery pack triggers the fault protection state and the multiple slave battery packs all trigger the fault protection state, or if the master battery pack and the multiple slave battery packs all receive the sleep instruction; under the condition that the master battery pack and the multiple slave battery packs meet a fourteenth condition, controlling the battery paralleling system to enter the second mode from the mode selection state, where the fourteenth condition includes: the voltages of the master battery pack and the multiple slave battery packs and the voltage difference, or if the master battery pack does not trigger the fault protection state and the multiple slave battery packs all trigger the fault protection state, or if the master battery pack and the multiple slave battery packs all receive the sleep instruction; under the condition that the master battery pack and the multiple slave battery packs meet a fifteenth condition, controlling the battery paralleling system to enter the third mode from the mode selection state, where the fifteenth condition includes: the voltages of the master battery pack and the multiple slave battery packs and the voltage difference, or if the master battery pack triggers the fault protection state and none of the multiple slave battery packs trigger the fault protection state; and under the condition that the master battery pack and the multiple slave battery packs meet a sixteenth condition, controlling the battery paralleling system to enter the fourth mode from the mode selection state, where the sixteenth condition includes: the second current and the voltage difference, and if none of the master battery pack and the multiple slave battery packs trigger the fault protection state, and if the cell temperatures of the master battery pack and the multiple slave battery packs meet a preset temperature range.

For example, under the condition that the master battery pack and the multiple slave battery packs all trigger the fault protection state, or the master battery pack and the multiple slave battery packs all receive the sleep instruction, the battery paralleling system is controlled to enter the first mode from the mode selection state.

If the absolute value of the voltage difference between the master battery pack and the slave battery pack is greater than the second preset voltage value, and the voltage of the master battery pack is less than the voltage of the slave battery pack, or the master battery pack does not trigger the fault protection state and the multiple slave battery packs all trigger the fault protection state, or the master battery pack and the multiple slave battery packs all receive the sleep instruction, the battery paralleling system is controlled to enter the second mode from the mode selection state.

If the absolute value of the voltage difference between the master battery pack and the slave battery pack is greater than the second preset voltage value, and the voltage of the master battery pack is less than the voltage of the slave battery pack, or the master battery pack triggers the fault protection state and none of the multiple slave battery packs trigger the fault protection state, the battery paralleling system is controlled to enter the third mode from the mode selection state.

If the absolute value of the voltage difference between the master battery pack and the slave battery pack is less than the second preset voltage value, and the second current is less than the preset value, or the master battery pack and the multiple slave battery packs all trigger the fault protection state, the battery paralleling system is controlled to enter the fourth mode from the mode selection state.

In the sleep stage, after the electric device is shut down, both the master battery pack and the slave battery pack enter sleep state. Specifically, the master battery pack sends a sleep instruction to the slave battery pack, and turns off the charge switch and the discharge switch to enter sleep state. After receiving the sleep instruction from the master battery pack, the slave battery pack feeds back sleep state information to the master battery pack, turns off the charge switch and the discharge switch, and enters sleep state after waiting for a preset period of time.

Referring to FIG. 6, in this embodiment, the master-slave dynamic paralleling system 10 for battery packs may be divided into one or more modules, where the one or more modules may be stored in the battery management system of the battery pack 12, and the battery management system executes the master-slave dynamic paralleling method for battery packs in the embodiments of this application. The one or more modules may be a series of computer program instruction segments capable of completing particular functions, where the instruction segments are used to describe a process of execution by the master-slave dynamic paralleling system 10 for battery packs in the electric device 1. For example, the master-slave dynamic paralleling system 10 for battery packs may be divided into a collection module 101 and a control module 102 in FIG. 6.

During a battery discharging process, the paralleling system includes N battery packs, N being greater than or equal to 2, and when M battery packs in the battery paralleling system are in discharging state, and N-M battery packs in the N battery packs are in idle state, the collection module 101 is configured to collect first operating parameters of each battery pack in the battery paralleling system, where the first operating parameters include voltage and fault protection state of each battery pack, and M is greater than or equal to 1 and less than or equal to N; and the control module 102 is configured to control, based on respective first operating parameters of the N-M battery packs and voltages of the M battery packs, the battery packs in idle state to be parallel-connected to the M battery packs.

During a charging process, the paralleling system includes J battery packs, J being greater than or equal to 2, and when K battery packs in the battery paralleling system are in charging state, and J-K battery packs in the J battery packs are in idle state, the collection module 101 is further configured to collect second operating parameters of each battery pack in the battery paralleling system, where the second operating parameters include voltage and fault protection state of each battery pack, and K is greater than or equal to 1 and less than or equal to J; and the control module 102 is further configured to control, based on respective second operating parameters of the J-K battery packs and voltages of the K battery packs, the battery packs in idle state to be parallel-connected to the K battery packs.

The master-slave dynamic paralleling system 10 for battery packs allows the master battery pack and the slave battery pack to be automatically connected to the battery paralleling system in the charging and discharging processes. This system has widespread application and can greatly meet the high power output and capacity expansion requirements of loads of the electric device. For specific content, reference may be made to the foregoing embodiments of the master-slave dynamic paralleling method for battery packs. Details are not described herein again.

If implemented in a form of software functional units and sold or used as separate products, the modules in the master-slave dynamic paralleling system 10 for battery packs may be stored in a computer-readable storage medium. Based on this understanding, all or part of the processes of the method in the embodiments of this application may be implemented by a computer program instructing related hardware. The computer program may be stored in the computer-readable storage medium, and when the computer program is executed by a processor, the steps in the foregoing method embodiments may be implemented. The computer program includes computer program code, where the computer program code may be source code, object code, an executable file, some intermediate forms, or the like. The computer-readable medium may include: any entity or apparatus capable of carrying the computer program code, a recording medium, a USB flash disk, a mobile hard disk, a diskette, a compact disc, a computer memory, a read-only memory (ROM, Read-Only Memory), a random access memory (RAM, Random Access Memory), an electrical carrier signal, a telecommunication signal, a software distribution medium, or the like. It should be noted that the content of the computer-readable medium may be appropriately added or deleted according to legislation and patent practice requirements of the jurisdiction. For example, in some jurisdictions, the computer-readable media exclude electrical carrier signals and telecommunication signals under legislation and patent practice.

It can be understood that the module division described above is a logical functional division, and other division manners may be used in actual implementation. In addition, function modules in the embodiments of this application may be integrated into one processing unit, or each of the modules may exist alone physically, or two or more modules may be integrated into one unit. The integrated module may be implemented either in the form of hardware or in the form of hardware plus software function modules.

It is apparent to those skilled in the art that this application is not limited to the details of the above illustrative embodiments and that this application can be implemented in other specific forms without departing from the spirit or essential features of this application. Therefore, from whatever point of view, the above embodiments of this application should be regarded as illustrative and non-limiting, and the scope of this application is defined by the appended claims but not the above descriptions, and thus all variations falling within the meaning and scope of equivalent elements of the claims of this application are intended to be incorporated into this application.

## Claims

1. A master-slave dynamic paralleling method for battery packs, applied to a battery paralleling system, wherein the paralleling system comprises N battery packs, N is greater than or equal to 2, and the method comprises:
when M battery packs in the battery paralleling system are in discharging state, and N-M battery packs in the N battery packs are in idle state, collecting first operating parameters of each battery pack in the battery paralleling system, wherein the first operating parameters comprise voltage and fault protection state of each battery pack, and M is greater than or equal to 1 and less than or equal to N; and
based on respective first operating parameters of the N-M battery packs and voltages of the M battery packs, controlling the battery packs in idle state to be parallel-connected to the M battery packs.

2. The master-slave dynamic paralleling method for battery packs according to claim 1, wherein the controlling the battery packs in idle state to be parallel-connected to the M battery packs comprises: under the condition that a voltage difference between a battery pack with the highest power in the M battery packs and any one of the N-M battery packs reaches a preset threshold range and no fault protection state is triggered, controlling the any one battery pack to be parallel-connected to the battery pack with the highest power and stay in discharging state together with the battery pack with the highest power.

3. The master-slave dynamic paralleling method for battery packs according to claim 1 or 2, wherein the controlling the battery packs in idle state to be parallel-connected to the M battery packs further comprises: under the condition that a voltage difference between a battery pack with the highest power in the M battery packs and any one of the N-M battery packs that is not parallel-connected to the battery pack with the highest power reaches a preset threshold range, controlling the any one battery pack to be parallel-connected to the battery pack with the highest power and then discharge.

4. The master-slave dynamic paralleling method for battery packs according to claim 3, wherein the N battery packs comprise a master battery pack and at least one slave battery pack, and the method further comprises:
performing paralleling mode switching based on the first operating parameters, wherein paralleling modes comprise a first mode, a second mode, a third mode, and a fourth mode, wherein in the first mode, charge switches and discharge switches of the master battery pack and the at least one slave battery pack are in open state; in the second mode, a pre-discharge switch, a charge switch, and a discharge switch of the master battery pack are all in closed state, and pre-discharge switches, charge switches, and discharge switches of the multiple slave battery packs are all in open state; in the third mode, the pre-discharge switches, charge switches, and discharge switches of the multiple slave battery packs are all in closed state, and the pre-discharge switch, charge switch, and discharge switch of the master battery pack are all in open state; and in the fourth mode, the pre-discharge switches, charge switches, and discharge switches of the master battery pack and the multiple slave battery packs are all in closed state.

5. The master-slave dynamic paralleling method for battery packs according to claim 4, wherein the first operating parameters further comprise a first current, a cell temperature, and a sleep instruction, and the performing paralleling mode switching based on the first operating parameters comprises:
after any one of the N-M battery packs is parallel-connected to the M battery packs, under the condition that the master battery pack and the multiple slave battery packs all meet a current testing condition, and none of the master battery pack and the multiple slave battery packs trigger the fault protection state, controlling the battery paralleling system to switch from the first mode to a mode selection state, wherein the current testing condition comprises: when the master battery pack and the multiple slave battery packs discharge a preset amount of electricity within a preset time interval, the first currents of the master battery pack and the multiple slave battery packs are all less than a preset current;
under the condition that the master battery pack and the multiple slave battery packs all meet the current testing condition, or the master battery pack does not trigger the fault protection state and the multiple slave battery packs trigger the fault protection state, controlling the battery paralleling system to switch from the second mode to the mode selection state;
under the condition that the master battery pack and the multiple slave battery packs all meet the current testing condition, or the master battery pack triggers the fault protection state and none of the multiple slave battery packs trigger the fault protection state, or the master battery pack and the multiple slave battery packs have all received the sleep instruction, controlling the battery paralleling system to switch from the third mode to the mode selection state; and
under the condition that the master battery pack and the multiple slave battery packs all receive the sleep instruction, controlling the battery paralleling system to switch from the fourth mode to the mode selection state.

6. The master-slave dynamic paralleling method for battery packs according to claim 5, wherein
the mode selection state comprises: the discharge switch of the master battery pack is in closed state or the charge switch of the master battery pack is in open state, and the discharge switches of the multiple slave battery packs are in closed state or the charge switch of the master battery pack is in open state.

7. The master-slave dynamic paralleling method for battery packs according to claim 4, wherein the performing paralleling mode switching based on the first operating parameters further comprises:
under the condition that the master battery pack and the multiple slave battery packs all trigger the fault protection state, controlling the battery paralleling system to enter the first mode from the mode selection state;
based on the first current and the voltage difference, or under the condition that the master battery pack does not trigger the fault protection state and the multiple slave battery packs all trigger the fault protection state, or under the condition that the master battery pack and the multiple slave battery packs all receive a sleep instruction, controlling the battery paralleling system to enter the second mode from the mode selection state;
based on the first current and the voltage difference, or under the condition that the master battery pack triggers the fault protection state and none of the multiple slave battery packs trigger the fault protection state, controlling the battery paralleling system to enter the third mode from the mode selection state; and
based on the first current and the voltage difference, or under the condition that none of the master battery pack and the multiple slave battery packs have triggered the fault protection state, or under the condition that cell temperatures of the master battery pack and the multiple slave battery packs meet a preset temperature range, controlling the battery paralleling system to enter the fourth mode from the mode selection state.

8. A master-slave dynamic paralleling method for battery packs, applied to a battery paralleling system, wherein the paralleling system comprises J battery packs, J is greater than or equal to 2, and the method comprises:
when K battery packs in the battery paralleling system are in charging state, and J-K battery packs in the J battery packs are in idle state, collecting second operating parameters of each battery pack in the battery paralleling system, wherein the second operating parameters comprise voltage and fault protection state of each battery pack, and K is greater than or equal to 1 and less than or equal to J; and
based on the respective second operating parameters of the J-K battery packs and the voltages of the K battery packs, controlling the battery packs in idle state to be parallel-connected to the K battery packs.

9. The master-slave dynamic paralleling method for battery packs according to claim 8, wherein the controlling the battery packs in idle state to be parallel-connected to the K battery packs comprises: under the condition that an absolute value of a voltage difference between a battery pack with the lowest voltage in the J battery packs and any one of the J-K battery packs is less than or equal to a first preset voltage value, and no fault protection state is triggered, controlling the any one battery pack to be parallel-connected to the battery pack with the lowest voltage and stay in charging state together with the battery pack with the lowest voltage.

10. The master-slave dynamic paralleling method for battery packs according to claim 8 or 9, wherein the controlling the battery packs in idle state to be parallel-connected to the K battery packs comprises: under the condition that an absolute value of a voltage difference between a battery pack with the lowest voltage in the J battery packs and any one of the J-K battery packs that is not parallel-connected to the battery pack with the lowest voltage is less than or equal to a first preset voltage value, controlling the any one battery pack to be parallel-connected to the battery pack with the lowest voltage and then get charged.

11. The master-slave dynamic paralleling method for battery packs according to claim 10, wherein the J battery packs comprise a master battery pack and at least one slave battery pack, and the method further comprises:
performing paralleling mode switching based on the second operating parameters, wherein paralleling modes comprise a first mode, a second mode, a third mode, and a fourth mode, wherein in the first mode, charge switches and discharge switches of the master battery pack and the multiple slave battery packs are in open state; in the second mode, a pre-discharge switch, a charge switch, and a discharge switch of the master battery pack are all in closed state, pre-discharge switches, charge switches, and discharge switches of the multiple slave battery packs are all in open state; in the third mode, pre-discharge switches, charge switches, and discharge switches of the multiple slave battery packs are all in closed state, and the pre-discharge switch, charge switch, and discharge switch of the master battery pack are all in open state; and in the fourth mode, the pre-discharge switches, charge switches, and discharge switches of the master battery pack and the multiple slave battery packs are all in closed state.

12. The master-slave dynamic paralleling method for battery packs according to claim 11, wherein the second operating parameters further comprise a second current, a cell temperature, and a sleep instruction, and the performing paralleling mode switching based on the second operating parameters comprises:
after any one of the J-K battery packs is parallel-connected to the K battery packs, under the condition that the master battery pack meets a first voltage testing condition and the multiple slave battery packs meet a second voltage testing condition, and none of the master battery pack and the multiple slave battery packs trigger the fault protection state, controlling the battery paralleling system to switch from the first mode to a mode selection state, wherein the first voltage testing condition comprises: an absolute value of a voltage difference between the master battery pack and the slave battery pack is greater than a second preset voltage value, and a voltage of the slave battery pack is less than a voltage of the master battery pack, or the absolute value of the voltage difference between the master battery pack and the slave battery pack is less than the second preset voltage value, and the second current is less than a preset current; and the second voltage testing condition comprises: the absolute value of the voltage difference between the master battery pack and the slave battery pack is greater than the second preset voltage value, and the voltage of the master battery pack is less than the voltage of the slave battery pack, or the absolute value of the voltage difference between the master battery pack and the slave battery pack is less than the second preset voltage value, and the second current is less than the preset current;
under the condition that the master battery pack meets the first voltage testing condition, or the master battery pack does not trigger the fault protection state and the multiple slave battery packs trigger the fault protection state, controlling the battery paralleling system to switch from the second mode to the mode selection state;
under the condition that the multiple slave battery packs meet the second voltage testing condition, or the master battery pack trigger the fault protection state and none of the multiple slave battery packs trigger the fault protection state, or the master battery pack and the multiple slave battery packs all receive the sleep instruction, controlling the battery paralleling system to switch from the third mode to the mode selection state; and
under the condition that the master battery pack and the multiple slave battery packs all receive the sleep instruction, controlling the battery paralleling system to switch from the fourth mode to the mode selection state.

13. The master-slave dynamic paralleling method for battery packs according to claim 12, wherein
the mode selection state comprises: the discharge switch of the master battery pack is in closed state or the charge switch of the master battery pack is in open state, and the discharge switches of the multiple slave battery packs are in closed state or the charge switch of the master battery pack is in open state.

14. The master-slave dynamic paralleling method for battery packs according to claim 12, wherein the performing paralleling mode switching based on the second operating parameters further comprises:
under the condition that the master battery pack and the multiple slave battery packs all trigger the fault protection state, or under the condition that the master battery pack and the multiple slave battery packs all receive the sleep instruction, controlling the battery paralleling system to enter the first mode from the mode selection state;
based on the voltages of the master battery pack and the multiple slave battery packs and the voltage difference, or under the condition that the master battery pack does not trigger the fault protection state and the multiple slave battery packs all trigger the fault protection state, or under the condition that the master battery pack and the multiple slave battery packs all receive the sleep instruction, controlling the battery paralleling system to enter the second mode from the mode selection state;
based on the voltages of the master battery pack and the multiple slave battery packs and the voltage difference, or under the condition that the master battery pack triggers the fault protection state and none of the multiple slave battery packs trigger the fault protection state, controlling the battery paralleling system to enter the third mode from the mode selection state; and
based on the second current and the voltage difference, and under the condition that none of the master battery pack and the multiple slave battery packs trigger the fault protection state, and under the condition that cell temperatures of the master battery pack and the multiple slave battery packs meet a preset temperature range, controlling the battery paralleling system to enter the fourth mode from the mode selection state.

15. An electric device, wherein the electric device comprises:
a battery paralleling system and a load, wherein the battery paralleling system is used to supply power to the load; and
the battery paralleling system comprises multiple battery packs, and the battery pack comprises a battery management system,
the battery management system being used to load and execute the master-slave dynamic paralleling method for battery packs according to any one of claims 1 to 14.

16. The electric device according to claim 15, wherein the electric device comprises an electric vehicle, or an electric bicycle, or an electric motorcycle.

17. A storage medium, storing at least one computer instruction, wherein when the at least one computer instruction is executed by a processor, the master-slave dynamic paralleling method for battery packs according to any one of claims 1 to 14 is implemented.
